Europäisches Patentamt

European Patent Office

Office européen des brevets

(19)

(11) Numéro de publication: **0 109 870**
**A1**

# (12) DEMANDE DE BREVET EUROPEEN

(21) Numéro de dépôt: **83402024.0**

(22) Date de dépôt: **18.10.83**

(51) Int. Cl.³: **G 02 B 7/26**
**H 01 R 13/631**

(30) Priorité: **26.10.82 FR 8217916**

(43) Date de publication de la demande:
**30.05.84 Bulletin 84/22**

(84) Etats contractants désignés:
**DE GB IT**

(71) Demandeur: **SOCAPEX**
**10 bis, quai Léon Blum**
**F-92153 Suresnes(FR)**

(72) Inventeur: **Parchet, Pierre**
**THOMSON-CSF SCPI 173, bld Haussmann**
**F-75379 Paris Cedex 08(FR)**

(72) Inventeur: **Bouygues, Jean**
**THOMSON-CSF SCPI 173, bld Haussmann**
**F-75379 Paris Cedex 08(FR)**

(74) Mandataire: **Vesin, Jacques et al,**
**THOMSON-CSF SCPI 173, Bld Haussmann**
**F-75379 Paris Cedex 08(FR)**

(54) **Embout de connexion optique multi-fibres, connecteur utilisant un tel embout, et appareil pour le montage de fibres dans ledit embout.**

(57) La présente invention concerne un embout de connexion optique multi-fibres, un connecteur de fibres optiques utilisant un tel embout, ainsi qu'un appareil pour le montage de fibres dans ledit embout. Ce connecteur comporte un plan de référence de raccord et deux piges (2, 3) cylindriques sensiblement perpendiculaires à ce plan. Chaque embout (8) comporte un plan de référence d'embout s'appuyant sur le plan de référence de raccord et deux rainures en V sur sa face antérieure où débouchent les fibres (51) situées à une cote précise par rapport au plan de référence d'embout. Les embouts (8) sont alignés lorsque les gorges en V viennent en butée de part et d'autre des piges (2, 3).

FIG_3-a

FIG_3-b

FIG_3-c

EP 0 109 870 A1

# EMBOUT DE CONNEXION OPTIQUE MULTI-FIBRES, CONNECTEUR UTILISANT UN TEL EMBOUT ET APPAREIL POUR LE MONTAGE DE FIBRES DANS LEDIT EMBOUT

La présente invention concerne un embout de connexion optique multi-fibres, un connecteur de fibres optiques utilisant un tel embout, ainsi qu'un appareil pour le montage des fibres dans ledit embout.

L'utilisation de câbles de transmission d'informations contenant une pluralité de fibres optiques nécessite l'interconnexion de celles-ci, connexions définitives dans le cas des épissures ou connexions détachables faisant appel à des connecteurs de fibres optiques. Dans ce dernier cas, on utilise soit des connecteurs du type monofibre, c'est-à-dire dans lesquels on réalise l'alignement fibre par fibre, soit des connecteurs multi-fibres dans lesquels on réalise simultanément l'alignement de l'ensemble des fibres d'un câble avec l'ensemble des fibres de l'autre câble. La première technique nécessite la réalisation d'un embout par fibre, chaque paire d'embouts des deux câbles étant réunie à l'aide d'un manchon d'alignement. Une telle technique est décrite par exemple dans les demandes françaises 2 479 483, 2 493 535 et 2 493 536. Il en résulte nécessairement une connexion coûteuse du fait de l'utilisation d'une pluralité d'embouts, de manchons d'alignement, ainsi qu'une pluralité d'opérations de centrage et fixation de chaque fibre dans son embout.

La seconde méthode qui consiste à réaliser des embouts à fibres multiples est beaucoup plus économique mais aucune réalisation simple jusqu'à ce jour n'a été proposée. L'embout de connexion et le connecteur utilisant ces embouts tels que décrits dans le brevet français 2 487 528 sont en effet particulièrement longs et délicats à mettre en oeuvre. L'embout du type en V réalisé dans ce brevet nécessite en effet pour son montage l'utilisation dans l'appareil de montage d'une pige venant se placer au fond de la gorge du

2

V de l'appareil de centrage, sur lequel s'appuient deux cales prenant également appui sur les parois du V, formant ainsi un nouveau V dans lequel sont placées de nouvelles piges en contact les unes avec les autres et entre lesquelles viennent prendre place les fibres à positionner dans l'embout correspondant, avant surmoulage de l'ensemble dans l'embout de manière connue en soi. Une telle technique est particulièrement longue et délicate à mettre en oeuvre compte tenu du grand nombre de pièces mobiles intermédiaires nécessaires pour son utilisation. En particulier, on notera que les dimensions du connecteur sont telles que l'obtention de la planéité sur les faces de référence du dièdre de l'appareillage devient très difficile. De même, la précision sur l'angle du dièdre est critique notamment pour le positionnement des fibres externes. De plus, les efforts pour obtenir un bon appui lors du réalignement de deux embouts sont nécessairement importants de par les dimensions de l'embout de connexion.

L'embout selon l'invention permet d'éviter ces inconvénients. Il est caractérisé en ce qu'il comporte un corps muni d'une part d'une pluralité de logements de fibres optiques débouchant sur une face antérieure et d'autre part d'un plan de référence situé sur l'une de ses faces permettant de repérer de manière précisé la cote (z) des fibres, et des moyens relatifs pour l'alignement desdites fibres dans le plan (x, y) constitués par deux gorges en forme de V réalisées sur la face antérieure de l'embout, l'arête de chaque gorge étant située dans un plan perpendiculaire au plan de référence, lesdites arêtes étant symétriques par rapport au plan médian de l'embout perpendiculaire au plan de référence.

De préférence, l'arête sera perpendiculaire au plan de référence de l'embout, ce qui est le plus simple à réaliser industriellement.

Pour plus de simplicité, on utilisera généralement un corps de forme sensiblement parallélépipédique, la face antérieure de l'embout étant perpendiculaire au plan de référence. Un tel embout de connexion multi-fibres permet de réaliser un connecteur d'encombrement réduit grâce au maintien des fibres à faible distance l'une de l'autre. De plus, la mise en oeuvre d'un tel connecteur est aisée puisque le faisceau de fibres est traité globalement.

Le connecteur de fibres optiques selon l'invention comporte généralement deux embouts multi-fibres et des moyens de raccordement et de maintien des deux embouts l'un par rapport à l'autre de manière à aligner chaque fibre d'un embout avec une fibre de l'autre embout. Il est caractérisé d'une part en ce que chaque embout est conforme à la réalisation ci-dessus et d'autre part, en ce que les moyens de raccordement et de maintien des deux embouts comprennent notamment un raccord comportant un plan de référence de raccord et deux piges cylindriques flottantes situées dans un plan sensiblement perpendiculaire au plan de référence du raccord, des moyens pour appliquer le plan de référence de chaque embout sur le plan de référence de raccord et des moyens pour appliquer les embouts l'un contre l'autre de manière à assurer un contact entre chaque plan d'une gorge en V d'un embout et la pige correspondante du raccord.

En d'autres termes, un connecteur selon l'invention comporte donc un raccord et deux embouts tels que décrits ci-dessus. Le raccord comporte un plan de référence sur lequel viennent se positionner chaque plan de référence de chaque embout et deux piges cylindriques flottantes, disposées dans un plan sensiblement perpendiculaire au plan de référence du raccord. Sous l'action de forces adéquates, on réalise la connexion et l'alignement.

Au niveau des embouts eux-mêmes, les éléments de ceux-ci qui coopèrent avec les moyens définis plus haut sont un plan de référence sur le corps de l'embout qui vient en appui sur le plan de référence du raccord, et les deux rainures en V réalisées de préférence perpendiculairement au plan de référence de l'embout tel que ceci a été précisé plus haut. La précision nécessaire pour ces embouts se situe au niveau de l'angle de l'arête des rainures en V par rapport au plan de référence sur le corps de chaque embout.

4

La tolérance d'usinage sur l'entre-axe des deux arêtes des gorges en V dans chaque embout, est rattrapée dans une forme préférentielle de réalisation de l'invention, par la déformation élastique des deux bras créés dans l'embout par la présence d'une fente, située dans le plan médian de celui-ci, perpendiculaire au plan de référence. Bien entendu, la présence de cette fente permettant d'obtenir une certaine élasticité des deux bras ainsi créés dans l'embout ne se justifie que dans la mesure où la précision sur l'entre-axe des arêtes des gorges en V n'est pas suffisante par rapport à la précision que l'on veut obtenir pour le centrage des fibres. Dans le cas contraire, cette fente n'est pas nécessaire.

Les moyens pour appliquer le plan de référence de l'embout sur celui du raccord seront constitués, par exemple, par un ressort situé dans une rainure symétrique par rapport au plan médian du raccord perpendiculaire au plan de référence ou par deux ressorts disposés dans deux gorges symétriques par rapport au même plan médian, dans le cas d'un embout fendu. Il est alors préférable que l'axe de ces gorges passe sensiblement par le milieu des logements des piges flottantes. Il est possible d'utiliser un embout fendu et un embout non fendu ensemble avec chacun leur système de ressorts adéquats.

Les moyens pour appliquer les embouts l'un contre l'autre seront, par exemple des écrous se vissant sur le raccord et comprimant un ressort s'appuyant sur la face postérieure de l'embout, par exemple, par l'intermédiaire d'une collerette.

L'invention concerne également un appareil pour le montage de fibres dans un embout tel que défini ci-dessus, caractérisé en ce qu'il comporte un plan de référence d'appui sur lequel vient reposer le plan de référence d'embout, des piges cylindriques calibrées ayant leur axe dans un plan perpendiculaire audit plan, à une distance prédéterminée correspondant à la distance des arêtes des gorges de l'embout, des moyens pour maintenir à une cote (z) précise les fibres débouchant de l'embout, des moyens pour appliquer le plan de référence de l'embout sur le plan de référence d'appui et des moyens pour appliquer les plans latéraux des gorges en V sur les piges cylindriques.

5

De préférence, le rayon des piges cylindriques calibrées de l'appareil sera supérieur à celui des piges calibrées utilisées dans le connecteur défini plus haut. De même, on placera généralement l'axe desdites piges calibrées perpendiculairement au plan de référence d'appui. Dans tous les cas, bien entendu, l'angle fait par l'axe de ces piges dans un plan perpendiculaire au plan de référence d'appui par rapport à ce dernier sera égal à l'angle fait par les arêtes des gorges en V dans un plan perpendiculaire au plan de référence d'embout par rapport à ce dernier, au jeu près.

La mise en place des fibres dans l'embout se fait par une technique appelée couramment "transfert de précision", en prenant référence sur la face d'appui des embouts (plan de référence sur le corps de l'embout) et sur les deux rainures en V situées dans la face antérieure de l'embout. Le positionnement des fibres dans l'outillage de surmoulage qui permet la fixation de chaque fibre dans son trou correspondant dans l'embout à l'aide d'une résine polymérisable ou durcissable est obtenu soit par un assemblage de piges calibrées sur un plan d'appui de référence, soit par une pièce comportant des rainures en V avec un pas très précis. Pour plus de détail sur ces techniques, on pourra par exemple se reporter aux brevets américains 4 160 580, 4 108 534, 3 871 935. Lors de la mise en vis-à-vis de deux embouts dans leur élément de raccordement de manière à constituer le connecteur selon l'invention, lesdits embouts viennent en butée sur les piges de centrage. Par conséquent, bien qu'il ne soit pas nécessaire à la face antérieure de chaque embout d'être parallèle aux arêtes des gorges en V avant finition dudit embout, cette face antérieure doit être amenée, lors du polissage des fibres et de cette face antérieure, à une cote précise, parallèle auxdites arêtes et donc perpendiculaire au plan de référence. Toutefois, on notera que l'erreur linéaire longitudinale lors de la mise en vis-à-vis de deux fibres optiques est un facteur relativement tolérant qui peut être minimisé par l'apport de liquide adaptateur d'indice (voir le brevet US 4 160 580 concernant les différentes possibilités de mésalignement de fibres optiques, ces différentes possibilités étant classées dans l'ordre décroissant d'importance).

6

L'invention sera mieux décrite à l'aide des exemples de réalisation suivants, donnés à titre non limitatif, conjointement avec les figures qui représentent :

la figure 1 : une vue d'un connecteur selon l'invention selon un premier mode de réalisation;

- la figure 2 : une vue d'une fiche de connexion du connecteur de la figure 1;

- la figure 3 : une vue d'un connecteur selon un deuxième mode de réalisation de l'invention;

- la figure 4 : une vue d'une fiche de connexion du connecteur de la figure 3;

- la figure 5 : une vue schématique d'un appareil de montage des fibres optiques dans les embouts des connecteurs selon l'invention.

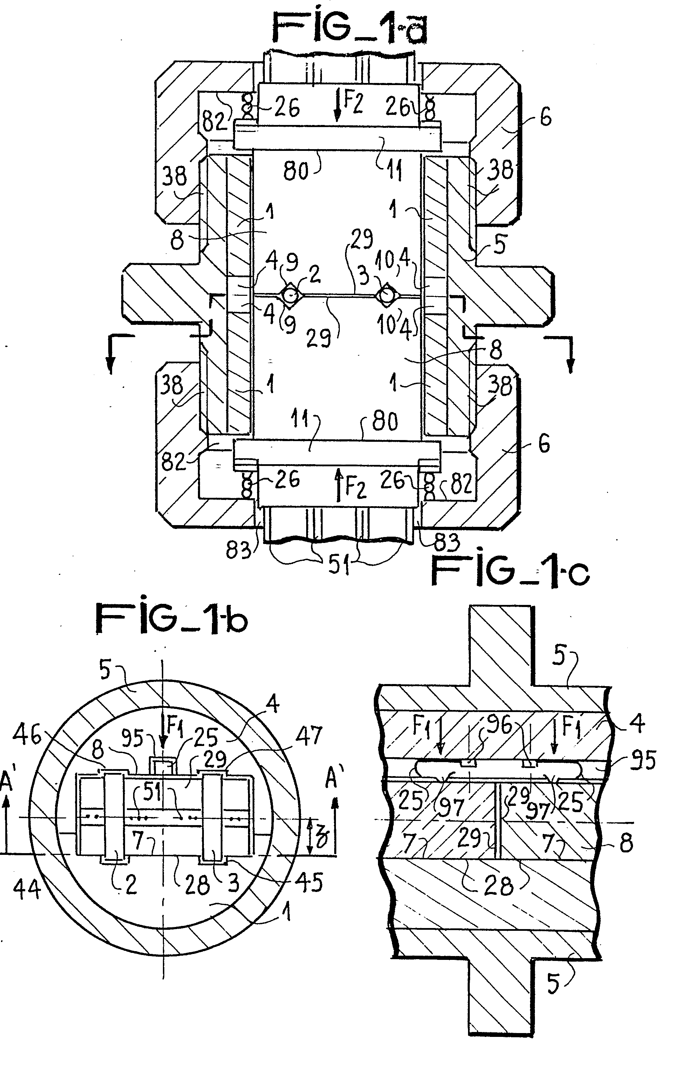

Sur la figure 1, est représenté un connecteur selon un premier mode de réalisation de l'invention. Ce connecteur est essentiellement composé d'un raccord représenté en coupe sur la figure 1b, et de deux fiches de connexions comportant essentiellement un embout 8, un écrou 6 permettant de fixer la fiche sur le corps 5 du raccord, et une collerette d'embout 11 s'appuyant d'une part sur la face arrière 80 de l'embout 8 et d'autre part, par l'intermédiaire du ressort 26, sur la face interne 82 de l'écrou 6, celui-ci possédant une ouverture 83 dans laquelle vient se positionner le câble optique 27 (la collerette d'embout est, comme son nom l'indique, percée en son centre d'une ouverture laissant également passer le câble optique 27). L'autre fiche, connectée à l'autre extrémité du corps de raccord 5, est rigoureusement identique dans cet exemple à la fiche déjà décrite et chaque élément porte les mêmes références.

Dans le corps de raccord 5 (voir figure 1b) est disposée une embase de raccord 1 dans laquelle sont fixées deux piges cylindriques calibrées 2, 3 montées flottantes à l'intérieur de logements adéquats 44 et 45 d'une part, 46 et 47 dans le chapeau 4 du raccord d'autre part. L'embase et le chapeau se prolongent jusqu'à l'extrémité du corps de raccord 5, compte tenu du fait que cette embase

7

comporte sur sa partie supérieure le plan de référence de raccord 28 sur lequel viennent se positionner les plans de référence d'embout 7 ainsi qu'on le verra plus loin. Le chapeau 4 comporte également un ressort 25 situé sensiblement sur l'axe de symétrie vertical (plan médian) du corps de raccord permettant d'appliquer une force $F_1$ sur la partie supérieure de chaque embout 8. Ceci a pour but de plaquer le plan de référence 7 de l'embout de connexion 8 sur le plan de référence 28 de l'embase 1 du raccord. Ce ressort 25 est logé dans une rainure 95 symétrique par rapport au plan médian défini ci-dessus comme représenté sur les figures 1b et 1c. La figure 1c est une vue en coupe longitudinale partielle de l'embout 5. On remarquera les ressorts 25, fixés dans le sommet des rainures 95 en 96, recourbés et munis d'un bossage 97 à leur extrémité pour exercer la pression voulue sur l'embout 8.

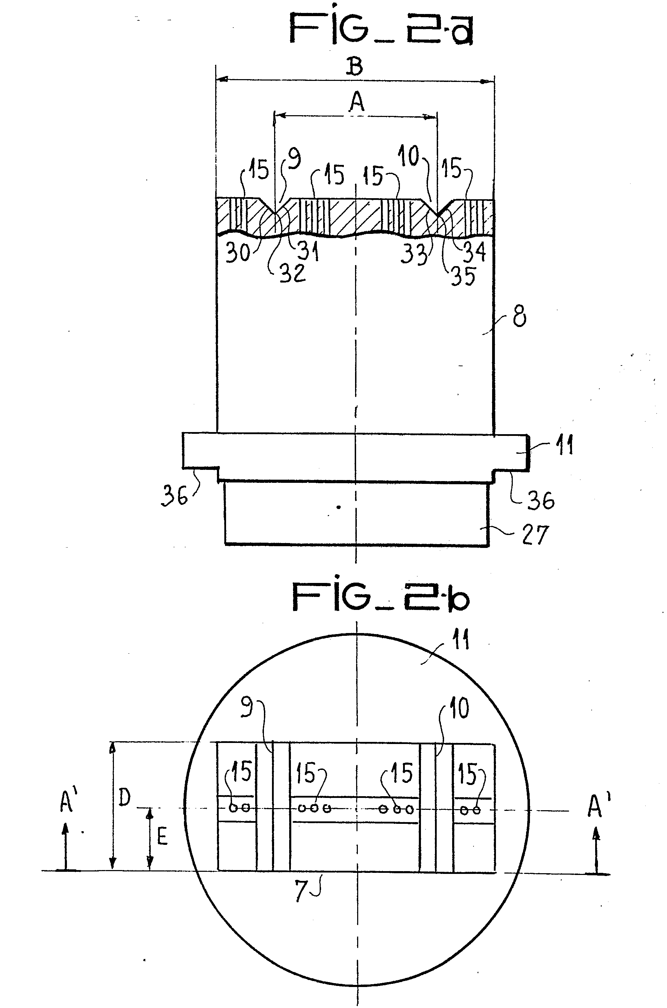

Chaque embout de connexion 8 comporte sur sa face antérieure 29 deux gorges en V, 9 et 10, dont les faces respectives (30, 31 et 33, 34, voir figure 2) viennent s'appuyer contre les piges flottantes calibrées 2 et 3, sous l'action de forces $F_2$ engendrées par les ressorts 26 lors du serrage (filetage 38) des écrous 6 de fiches sur le corps de raccord 5 par l'intermédiaire des collerettes 11. Ces forces $F_2$ ont pour but de plaquer les embouts 8 l'un contre l'autre et de plaquer chaque gorge en V contre la pige flottante correspondante, de manière à assurer le contact entre la pige 2 et les plans 30 et 31 d'une part et la pige 3 et les plans 33 et 34 d'autre part, pour chacun des deux embouts 8. On assure ainsi un alignement des fibres 51 dans les embouts 8, chaque fibre d'un embout étant alignée par rapport à une fibre de l'autre embout. Au cours de cette opération, les faces antérieures 29 de chaque embout viennent pratiquement au contact l'une de l'autre au jeu près. Sur la figure 1b, on notera que les plans de référence 7 et 28 communs après alignement sont désignés par AA, les fibres 51 étant à une distance z de ce plan AA (cote z).

Sur la figure 2, on a représenté schématiquement un embout 8 non monté vu de dessus et vu de face. Sur cette figure, les mêmes éléments que ceux des figures précédentes portent les mêmes références. La face antérieure de l'embout 29 comporte deux rainures en V, 9 et 10. Les plans des dièdres ainsi formés, respectivement 30, 31 et 33, 34 définissent ainsi les arêtes 32 et 35 des gorges en V. Ces arêtes doivent être le plus rigoureusement possible perpendiculaires au plan de référence 7 de l'embout 8 (la vue représentée sur la figure 2a est une vue parallèle au plan de référence 7). L'embout, sur sa partie arrière, comporte la collerette 11 traversée par le câble optique 27, et une rainure circulaire 36 servant de logement au ressort 26. Il est également important, au cours de l'usinage de cet embout, de définir avec précision la cote A qui représente la distance entre les deux arêtes 32 et 35 des gorges en V, 9 et 10. Les trous calibrés 15 permettant le passage des fibres optiques 51 ont leur centre repéré de manière précise par rapport au plan de référence 7 (ou A'A') de l'embout 8, cette cote étant repérée par la lettre E sur la figure. Cette cote E sera généralement égale à la cote z du centre des fibres optiques après centrage mais elle peut être également un peu différente, suivant la tolérance d'usinage des trous 15 (tolérance sur la cote E).

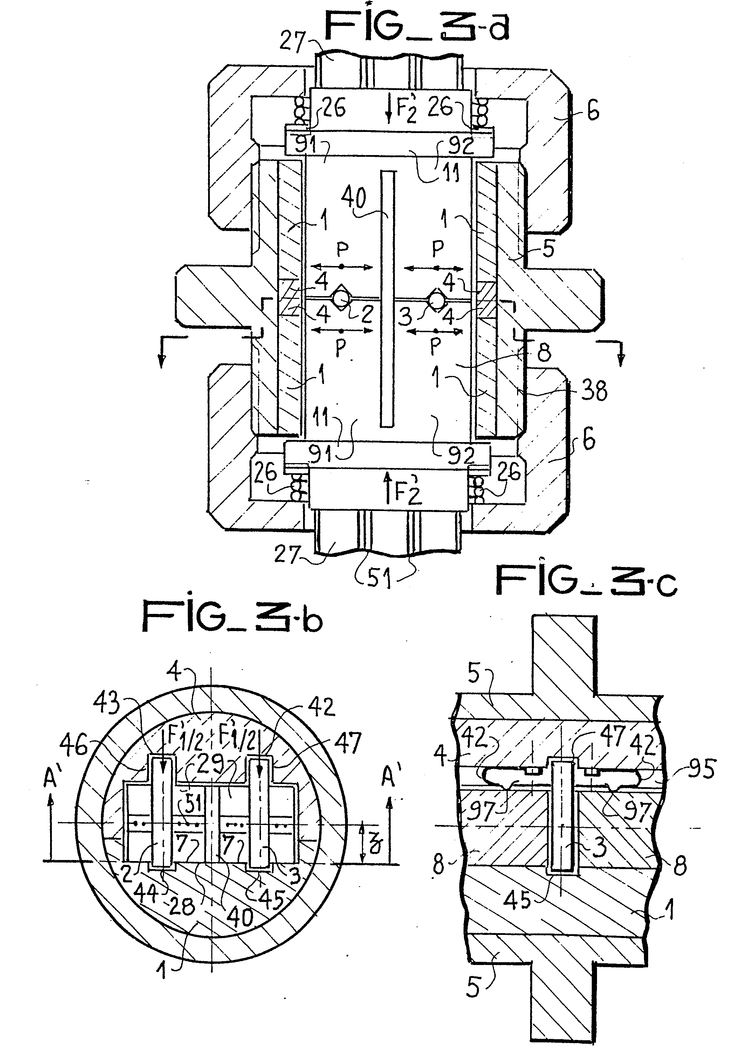

La figure 3 représente un deuxième mode de réalisation du connecteur selon l'invention. Sur cette figure, les mêmes éléments que ceux des figures précédentes portent les mêmes références. Essentiellement, chaque embout 8 est ici séparé en deux bras 91, 92. Chaque bras est séparé de l'autre par une fente 40 donnant une certaine souplesse latérale (selon les flèches P sur la figure) à chaque bras, permettant de s'affranchir de la très grande précision sur la cote A entre les arêtes des gorges 32 et 35. Par exemple, pour un embout dont la cote B est de 15 mm et la hauteur D de 8 mm, la profondeur C de la fente 40 sera comprise entre 10 et 15 mm environ, la largeur de cette fente pouvant être de l'ordre de 2 mm. Mais cette dernière n'a pas d'influence sur l'alignement des fibres l'une par rapport à l'autre. On notera sur la figure 3b, que cette fente 40 est située sensiblement sur le plan médian vertical de l'embout 8. La profondeur C de la fente sera ajustée selon les résultats désirés en fonction des matériaux utilisés. On remarquera par ailleurs sur cette figure comme sur les figures précédentes, que la face antérieure 29 de chaque embout 8 est réalisée dans le cas présent perpendiculairement au plan de référence 7 de l'embout. Pour assurer le plaquage du plan de référence 7 de l'embout sur le plan de référence 28 de l'embout 1 du raccord, on utilise deux ressorts 42, 43, situés de part et d'autre de la fente, de manière à appliquer indépendamment l'un de l'autre, une force $F'_1/2$ sur chaque bras 91, 92 de l'embout 8. (Les forces $F'_2$ sont engendrées par les mêmes moyens que ceux décrits précédemment).

Les rainures en V étant situées sensiblement au milieu des faces avant de chaque bras 91, 92, les ressorts et leurs rainures seront disposés symétriquement par rapport au plan perpendiculaire au plan de référence et passant par l'arête de la gorge correspondante. Dans le cas où les rainures seraient reportées sur les côtés extérieurs de l'embout, les ressorts resteraient de préférence sensiblement dans la même disposition que ci-dessus.

Ces ressorts 42 et 43 sont logés respectivement dans une rainure 95, 99 qui se confond, sur la figure 3b avec les logements 46, 47 supérieurs des piges flottantes 2 et 3. La figure 3c permet d'apprécier la disposition des ressorts 42 (et 43) dans la rainure 95 (et 99), de part et d'autre de la pige flottante 3. Ces ressorts ont même structure que ceux de la figure 1 et s'appuient en 97 sur les embouts 8. La rainure 99, symétrique de la rainure 95 par rapport au plan médian du raccord perpendiculaire au plan de référence 28, n'a pas été représentée sur la figure 3c. Bien entendu, l'un des embouts peut comporter deux bras (et la partie de raccord correspondante est telle qu'illustrée sur la figure 3c), l'autre embout ne comportant pas de fente médiane (avec une partie de raccord correspondante à un seul ressort comme sur la figure 1c).

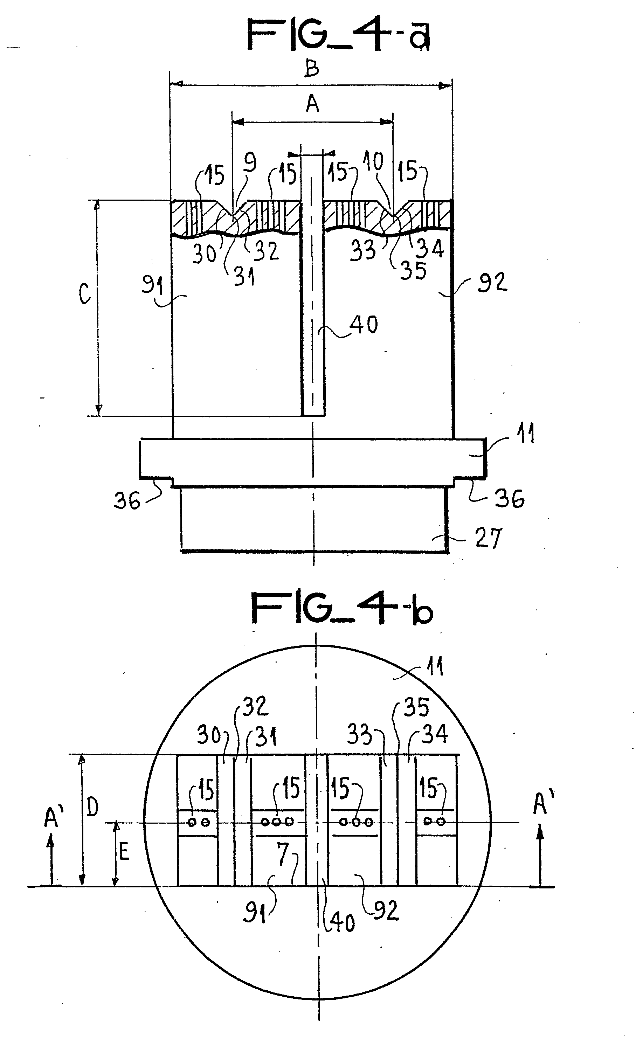

La figure 4 représente une vue de dessus parallèlement au plan de référence 7 et une vue en coupe de l'embout selon la variante de la figure 3. Sur cette figure, les mêmes éléments que ceux des figures précédentes portent les mêmes références. La différence essentielle avec la figure 2 est la présence ici de la fente 40 de

10

profondeur C, cette fente donnant une souplesse relative des deux bras 91, 92 et permettant ainsi une moins grande précision sur la cote A entre les arêtes 32 et 35. Chaque bras 91, 92 est muni de l'une des gorges en V, 9 et 10. Par ailleurs, comme sur la figure 2, l'embout est représenté non monté (sans fibres) ce qui explique la cote E entre le centre des trous 15 et le plan de référence A'A'. Bien entendu, le débattement latéral relatif des rainures en V engendrées par cette fente 40 sera toujours supérieur ou égal à la tolérance de fabrication obtenue sur l'entre-axe A.

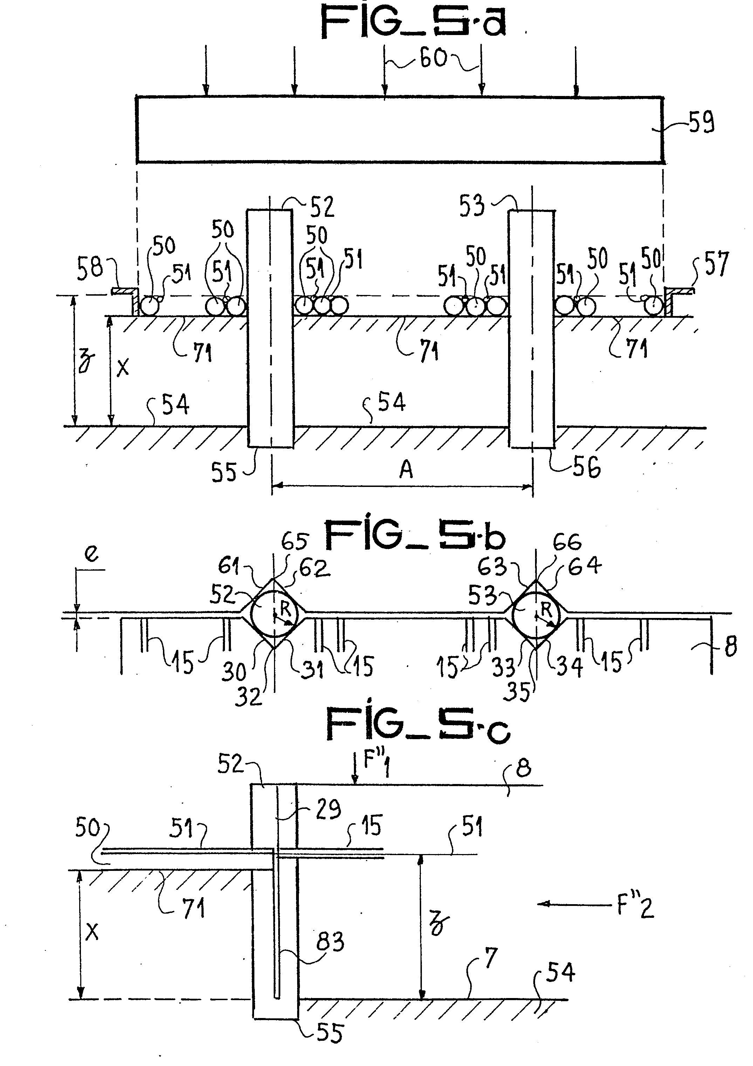

Sur la figure 5, est représenté un exemple de mise en place des fibres optiques dans les embouts. Pour cela, on dispose d'un appareil comportant un premier plan de référence d'appareil 54 et un deuxième plan de référence 71 situé à une cote X par rapport au plan 54. Les plans de référence 54 et 71 parallèles entre eux se rejoignent par un plan perpendiculaire 83. Dans le plan de référence 54, au niveau du plan 83, sont logées deux piges 52 et 53 dans deux logements respectivement 55 et 56. Ces piges cylindriques calibrées de rayon R légèrement supérieur à celui des piges calibrées 2 et 3 (voir plus loin) sont disposées de façon rigoureusement perpendiculaire au plan de référence 54 avec une cote A séparant leurs axes 52 et 53 de très grande précision. Ces piges cylindriques 52 et 53 s'appuient également sur des rainures en V, 61, 62, 65 et 63, 64, 66, créées dans le plan vertical 83, avec leurs arêtes 65 et 66 également rigoureusement perpendiculaires aux plans 54 et 71. Sur le plan de référence 71 sont disposées une pluralité de piges cylindriques 50 de diamètre tel que les fibres optiques 51, venant prendre appui entre deux piges cylindriques jointives 50, aient leur axe situé rigoureusement à la cote z (cette technique est bien connue de l'homme de métier, voir documents cités plus haut). Les piges 50 sont latéralement maintenues par des cales 57 et 58. Lorsque toutes les fibres 51 sont disposées aux endroits voulus entre les piges 50, on vient appliquer une cale 59 sur l'ensemble de ces fibres, qui créent ainsi une force calibrée 60 permettant d'aligner rigoureusement toutes les fibres à la cote z. Au préalable, on a positionné l'embout 8 (figure 5c) de sorte que son plan de référence 7 vienne s'appuyer sur le plan de référence 54 de l'appareillage de "transfert de précision", les fibres optiques 51 débouchant des trous calibrés 15 et venant se positionner entre les piges 50. Ceci s'effectue en appliquant une force F"$_1$ sur l'embout 8, tandis que l'application d'une force F"$_2$ à l'arrière de l'embout permet de plaquer les rainures en V, 30, 31, 32 et 33, 34, 35, contre les piges cylindriques 52 et 53. Les piges calibrées 52 et 53 ont un diamètre légèrement supérieur à celui des piges 2 et 3, pour la raison suivante : lorsque les fibres débouchant des trous calibrés 15 viennent s'appuyer entre deux piges cylindriques 50 de manière à repérer avec précision la cote z desdites fibres dans l'embout 8, et que les forces F"$_1$ et F"$_2$ sont correctement appliquées sur ledit embout, on réalise le surmoulage desdites fibres d'une manière connue en soi, c'est-à-dire que l'on introduit une résine durcissable polymérisable à travers un orifice situé au-dessus de la fibre et communiquant avec les trous 15 (non représenté sur la figure). Lorsque la résine est durcie, les fibres sont alors définitivement fixées dans l'embout. On peut alors supprimer les forces F"$_1$ et F"$_2$ et sortir l'embout de l'appareillage de transfert de précision. La face antérieure 29 de l'embout est alors soumise à un polissage de manière à polir l'extrémité des fibres et amener la face antérieure de l'embout rigoureusement perpendiculaire au plan de référence 7. De cette manière, on supprime une partie de la face antérieure dudit embout (quelques centièmes de millimètres). Par conséquent, si les piges 52 étaient de même diamètre que les piges 2 et 3, on ne pourrait aligner ensuite correctement les embouts l'un par rapport à l'autre car du fait des tolérances, les faces antérieures 29 des embouts seraient trop éloignées l'une de l'autre, provoquant ainsi des pertes de transmission.

Il est bien entendu que, si on le désire, la cote z des fibres dans l'embout peut être variable pour chacune des fibres, l'essentiel étant que chaque fibre soit repérée de manière précise dans chaque embout. En particulier, on peut utiliser un appareil de "transfert de précision" des fibres optiques semblable à celui utilisé dans le BF

12

2 487 528 avec une disposition en V des fibres mais des moyens de référence propres à l'invention (plan de référence et piges).

De même, il faut noter que, de manière connue en soi, l'appareil de transfert de précision peut comporter des rainures en V à la place du plan de référence 71 et des piges cylindriques calibrées 50 (voir les brevets américains cités plus haut).

Par ailleurs, on peut également remplacer l'une ou les deux piges cylindriques par une sphère de même diamètre procurant un appui identique. En particulier, cette substitution peut être avantageuse pour l'appareillage de montage, supprimant ainsi les contraintes de perpendicularité des axes des cylindres. Seul la précision sur l'entre-axe est alors importante.

Enfin, les gorges en V, 9 et 10, seront en général disposées le plus près possible du bord extérieur latéral de l'embout 8, pour une meilleure précision d'alignement.

Dans toute la présente description, ainsi qu'on peut les remarquer, les deux embouts utilisés dans le connecteur de l'invention sont identiques, ce qui permet de les utiliser aussi bien comme un embout "droit" ou un embout "gauche". Ceci est un avantage de l'invention. Bien entendu, ceci n'est pas nécessaire et on peut les distinguer si on le désire.

REVENDICATIONS

1. Embout de connecteur à fibres optiques multiples, caractérisé en ce qu'il comporte un corps (8) muni d'une part d'une pluralité de logements (15) de fibres optiques (51) débouchant sur une face antérieure (29) et d'autre part d'un plan de référence (7) situé sur l'une de ses faces permettant de repérer de manière précise la cote (z) des fibres, et des moyens relatifs pour l'alignement desdites fibres dans le plan (x, y) constitués par deux gorges (9, 10) en forme de V réalisées sur la face antérieure (29) de l'embout, l'arête (32, 35) de chaque gorge (9, 10) étant située dans un plan perpendiculaire au plan de référence (7), lesdites arêtes étant symétriques par rapport au plan médian de l'embout (8) perpendiculaire au plan de référence (7).

2. Embout de connecteur selon la revendication 1, caractérisé en ce que les arêtes (32, 35) des gorges sont perpendiculaires au plan de référence (7) de l'embout.

3. Embout selon l'une des revendications 1 ou 2, caractérisé en ce que le corps (8) de celui-ci est sensiblement parallélépipédique, sa face antérieure (29) après montage des fibres étant perpendiculaire au plan de référence (7).

4. Embout selon l'une des revendications 1 à 3, caractérisé en ce qu'il comporte une fente (40) située dans le plan médian de l'embout au plan de référence.

5. Connecteur de fibres optiques comportant deux embouts multi-fibres et des moyens de raccordement et de maintien des deux embouts l'un par rapport à l'autre de manière à aligner chaque fibre d'un embout avec une fibre de l'autre embout, caractérisé en ce que chaque embout (8) est conforme à l'une des revendications précédentes, tandis que les moyens de raccordement et de maintien des deux embouts (8) comprennent notamment un raccord (1, 2, 3, 4, 5) comportant un plan de référence de raccord (28) et deux piges cylindriques flottantes (2, 3) situées dans un plan sensiblement perpendiculaire au plan de référence du raccord (28), des moyens (25, 42, 43) pour appliquer le plan de référence (7) de chaque embout (8) sur le plan de référence de raccord (28) et des moyens (26) pour appliquer les embouts (8) l'un contre l'autre de manière à assurer un contact entre chaque plan (30, 31, 33, 34) d'une gorge (9, 10) et la pige correspondante (2, 3).

6. Connecteur selon la revendication 5, caractérisé en ce que les moyens pour appliquer le plan de référence d'embout (7), sur le plan de référence de raccord (28) sont constitués par au moins un ressort (42, 43) logé dans une rainure (95, 99) située dans le chapeau (4) du raccord (5), de manière symétrique par rapport au plan médian du raccord perpendiculaire au plan de référence de raccord (28).

7. Connecteur selon la revendication 6, dans lequel un embout au moins est conforme à la revendication 4, caractérisé en ce qu'il comporte deux ressorts (42, 43) logés respectivement dans une rainure (95, 99), les deux rainures (95, 99) étant symétriques par rapport audit plan médian d'embout.

8. Connecteur selon la revendication 7, caractérisé en ce que chaque rainure (95, 99) est dans le prolongement du logement (46, 47) de la pige correspondante (2, 3) du raccord.

9. Connecteur selon l'une des revendications 5 à 8, caractérisé en ce que le raccord (1, 2, 3, 4, 5) contient une embase (1) s'étendant sensiblement sur toute la longueur de celui-ci et comportant sur sa partie supérieure le plan de référence de raccord (28).

10. Appareil pour le montage de fibres dans un embout selon l'une des revendications 1 à 4, caractérisé en ce qu'il comporte un plan de référence d'appui (54) sur lequel vient reposer le plan de référence (7) d'embout (8), des piges cylindriques calibrées (52, 53) ayant leur axe dans un plan perpendiculaire audit plan (54), à une distance prédéterminée correspondant à la distance des arêtes des gorges de l'embout, des moyens pour maintenir à une cote (z) précise les fibres débouchant de l'embout (8), des moyens $(F''_2)$ pour appliquer le plan de référence (7) de l'embout (8) sur le plan de référence d'appui (54) et des moyens $(F''_2)$ pour appliquer les plans latéraux des gorges en V sur les piges cylindriques (52, 53).

15

11. Appareil selon la revendication 10, caractérisé en ce que les piges cylindriques calibrées (52, 53) ont leur axe perpendiculaire au plan de référence d'appui (54).

12. Appareil selon l'une des revendications 10 ou 11, caractérisé en ce que le rayon des piges cylindriques calibrées (52, 53) de celui-ci est supérieur au rayon des piges cylindriques calibrées utilisées dans le connecteur.

**FIG_1·a**

**FIG_1·b**

**FIG_1·c**

Fig_2·a

Fig_2·b

FIG_3-a

FIG_3-b

FIG_3-c

0109870

FIG_4-a

FIG_4-b

5/5

0109870

# FIG_5·a

# FIG_5·b

# FIG_5·c

0109870

Office européen
des brevets

**RAPPORT DE RECHERCHE EUROPEENNE**

Numéro de la demande

EP  83 40 2024

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | US-A-4 079 927  (L. ROCTON) <br> * résumé; colonne 2, lignes 51-57; figures 1-3 * | 1 | G 02 B   7/26 <br> H 01 R   13/631 |
| A | US-A-2 179 197  (T.E. RAYMOND) <br> * page 1, colonne de gauche, ligne 38 - colonne de droite, ligne 7; figures 1,2 * | 1 | |
| A | DE-A-2 627 042  (SIEMENS AG) <br> * revendications 1,7; figures 1-3 * | 1,3 | |
| A | ELECTRONICS LETTERS, vol. 17, no. 22, 29 octobre 1981, Londres (GB) <br> T. SATAKE et al.: "Low-loss multifibre connectors with plug-guide-grooved silicon", pages 828-830. * page 829, colonne de gauche, lignes 11-18; figures 1,2 * | 1,3 | |
| A | GB-A-2 020 844  (N.V. PHILIPS' GLOEILAMPENFABRIEKEN) <br> *. résumé; page 3, ligne 124 - page 4, ligne 8; figures 2a,2c * | 1 | |

DOMAINES TECHNIQUES RECHERCHES (Int. Cl. 3)

G 02 B     7/26
H 01 R   13/631
H 01 R   13/24
H 01 R   13/22
G 02 B     5/16

Le présent rapport de recherche a été établi pour toutes les revendications

| Lieu de la recherche <br> LA HAYE | Date d'achèvement de la recherche <br> 31-01-1984 | Examinateur <br> BEAVEN G.L. |
|---|---|---|